# FASCICULE DE BREVET EUROPEEN

(11) **EP 4 354 261 B1**
(45) Date de publication et mention de la délivrance du brevet: **04.02.2026**
(21) Numéro de dépôt: 23200158.6
(22) Date de dépôt: 27.09.2023
(51) Int. Cl.: G06F 3/01

(54) **PROCÉDÉ DE MONTAGE D'UN ACTIONNEUR HAPTIQUE ET ACTIONNEUR HAPTIQUE**
VERFAHREN ZUR MONTAGE EINES HAPTISCHEN AKTUATORS UND HAPTISCHER AKTUATOR
METHOD FOR MOUNTING A HAPTIC ACTUATOR AND HAPTIC ACTUATOR

(30) Priorité: 13.10.2022 FR 2210538
(43) Date de publication de la demande: 17.04.2024
(73) Titulaire: Valeo Comfort and Driving Assistance, 94000 Créteil (FR)
(72) Inventeur: EL-OUARDI, Nour-Eddine, 94000 Créteil (FR); TREUILLET, Sylvain, 94000 Créteil (FR)
(74) Mandataire: Delplanque, Arnaud

(56) Documents cités:
- FR-A1- 3 099 260

## Description

### Domaine technique

La présente invention concerne de manière générale le domaine technique des actionneurs haptiques.

Elle concerne plus particulièrement un procédé de montage d'un actionneur haptique sur un support et sur une surface tactile fixée au support.

L'invention trouve une application particulièrement avantageuse dans la calibration des performances électromécaniques des actionneurs haptiques.

### Arrière-plan technologique

Un actionneur haptique pour surface tactile comprend généralement un corps pouvant générer un champ magnétique et une pièce susceptible d'être attirée par ce champ magnétique.

Dans une configuration dite « pseudo-rattachée » le corps peut être fixée à une surface tactile à laquelle il convient de fournir un effet de retour haptique, et la pièce peut être fixée à un support sur lequel est montée la surface tactile. La pièce étant fixée au support, l'attraction entre la pièce et le corps due au champ magnétique résulte alors en un déplacement du corps vers la pièce et en donc en un déplacement de la surface tactile par rapport au support.

Le montage d'un actionneur haptique par rapport au support et à la surface tactile comprend classiquement une étape d'ajustement de la distance entre la pièce et le corps, appelée entrefer magnétique, pour obtenir une distance prédéterminée malgré des tolérances sur les dimensions des différentes pièces. L'entrefer caractérise la distance entre la pièce et le corps lorsque l'actionneur est au repos, c'est-à-dire lorsque le corps ne génère pas de champ magnétique.

La sensation de retour haptique dépend de l'entrefer : plus il est grand, plus la force d'attraction entre la pièce et le corps est faible. Un mauvais ajustement de l'entrefer peut donc dégrader les performances de l'actionneur haptique avec une sensation de retour haptique trop faible ou trop forte.

Cet ajustement de l'entrefer lors du montage de l'actionneur haptique permet donc d'obtenir la sensation de retour haptique désirée. Il est aussi nécessaire pour garantir un retour haptique homogène entre tous les actionneurs haptiques d'une même surface tactile ou d'une surface tactile à une autre.

Actuellement, l'entrefer est ajusté en itérant des étapes de mesure de la distance entre la pièce et le corps, par exemple de manière optique à l'aide de lasers, et de déplacement de la pièce par rapport au support (et donc par rapport au corps), par exemple par vissage.

Toutefois, ces étapes sont difficilement automatisables et requièrent des appareils de mesure coûteux et dont la précision est parfois insuffisante.

L'état de la technique peut par exemple être trouvé dans FR 3 099 260 A1.

### Résumé de l'invention

Dans ce contexte, la présente invention propose un procédé de montage d'un actionneur haptique sur un support et sur une surface tactile fixée au support, l'actionneur haptique comprenant :
- un corps adapté à générer un champ magnétique lorsque le corps est alimenté par un courant électrique ;
- une pièce adaptée à être attirée vers le corps sous l'effet du champ magnétique ;
- une extension fixée au corps et s'étendant en direction de la pièce ;
le procédé de montage comprenant les étapes suivantes :
- maintien de la pièce par un outil et déplacement de l'outil de manière à mettre l'outil en butée sur l'extension, l'outil présentant une forme conçue de telle sorte que, lorsque l'outil maintient la pièce et que l'outil est en butée sur l'extension, la pièce est située à une distance prédéterminée du corps ;
- fixation du corps à la surface tactile ;
- fixation de la pièce par rapport au support lorsque l'outil est en butée sur l'extension.

Ainsi grâce à l'invention, la pièce est mécaniquement positionnée à la distance voulue, c'est-à-dire à la distance prédéterminée, du corps. En effet, l'extension étant fixe par rapport au corps, la position de l'outil par rapport au corps, lorsque l'outil est en butée de l'extension, est contrôlée. Par conséquent, grâce à la forme spécifique de l'outil, la position de la pièce par rapport au corps, lorsque l'outil est en butée de l'extension, est également contrôlée.

La distance prédéterminée correspond ici à l'entrefer souhaité pour l'actionneur haptique. Cet entrefer souhaité est par exemple celui avec lequel l'actionneur haptique a été conçu pour fonctionner, préalablement à son montage. Cet entrefer souhaité est plus généralement déterminé en fonction d'une force d'attraction souhaitée entre la pièce et le corps.

En positionnant l'outil en butée de l'extension, l'entrefer est alors automatiquement ajusté à la distance prédéterminée. En fixant la pièce au support une fois l'outil en butée de l'extension, l'entrefer est alors fixé à la distance prédéterminée. En effet, le support et la surface tactile forment un ensemble sur lequel sont respectivement fixés la pièce et le corps à un moment où l'entrefer est égal à la distance prédéterminée.

L'ajustement de l'entrefer est obtenu de façon très simple par un mouvement et une mise en butée de l'outil.

Enfin, cet ajustement au moyen de l'outil permet une répétabilité du montage d'un actionneur haptique à un autre actionneur haptique. Par exemple, avec plusieurs actionneurs haptiques identiques d'une même surface tactile, un retour haptique homogène est facilement réalisable en répétant le positionnement de chaque pièce au moyen de l'outil.

Bien que l'outil doive être spécifiquement adapté pour fournir l'entrefer souhaité, il permet un ajustement automatique de celui-ci lors du montage de l'actionneur.

D'autres caractéristiques avantageuses et non limitatives du procédé conforme à l'invention, prises individuellement ou selon toutes les combinaisons techniquement possibles, sont les suivantes :
- l'outil comprend une surface extérieure conçue pour être au contact de la pièce et une surface intérieure conçue pour être au contact de l'extension, la surface extérieure s'étendant à une distance de la surface intérieure déterminée de sorte que la pièce est située à la distance prédéterminée du corps lorsque l'outil est en butée sur l'extension ;
- l'outil présente un profil étagé dans lequel la surface intérieure est parallèle à la surface extérieure ;
- l'outil est aussi conçu pour maintenir l'extension et le déplacement de l'outil comprend le positionnement du corps par rapport à la surface tactile, la fixation du corps à la surface tactile étant postérieure au déplacement de l'outil ou concomitant au déplacement de l'outil ;
- la pièce comprend un évidement traversé par l'extension, l'extension comprenant une extrémité d'un côté de la pièce opposé au corps, l'extrémité présentant une forme empêchant un passage de l'extrémité par l'évidement et permettant le maintien de l'extrémité entre la pièce et l'outil lorsque l'outil maintient la pièce ;
- la pièce dépasse du corps selon une direction orthogonale à une direction d'attraction de la pièce vers le corps ;
- l'outil comprend un électroaimant ;
- au moins l'une parmi la fixation du corps à la surface tactile et la fixation de la pièce par rapport au support comprend l'utilisation d'une colle ;
- la colle est déposée avant le déplacement de l'outil de manière à mettre en butée l'outil sur l'extension ;
- la pièce comprend deux surfaces inclinées l'une par rapport à l'autre, la colle assurant, après avoir durci, la fixation de chacune des deux surfaces de la pièce par rapport au support.

L'invention propose également un actionneur haptique comprenant :
- un corps adapté à générer un champ magnétique lorsque le corps est alimenté par un courant électrique, le corps étant fixé à une surface tactile ;
- une pièce adaptée à être attirée vers le corps sous l'effet du champ magnétique, la pièce étant fixée à un support sur lequel est fixé la surface tactile ;
une colle durcie agencée pour fixer le corps à la surface tactile ou la pièce au support.

Optionnellement et avantageusement, la pièce dépasse du corps selon une direction orthogonale à une direction d'attraction de la pièce vers le corps.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en coupe d'un actionneur haptique avant son positionnement contre une surface tactile et un support de la surface tactile ;
[Fig. 2] est une vue schématique en coupe de l'actionneur haptique de la figure 1 après son positionnement contre la surface tactile et le support ;

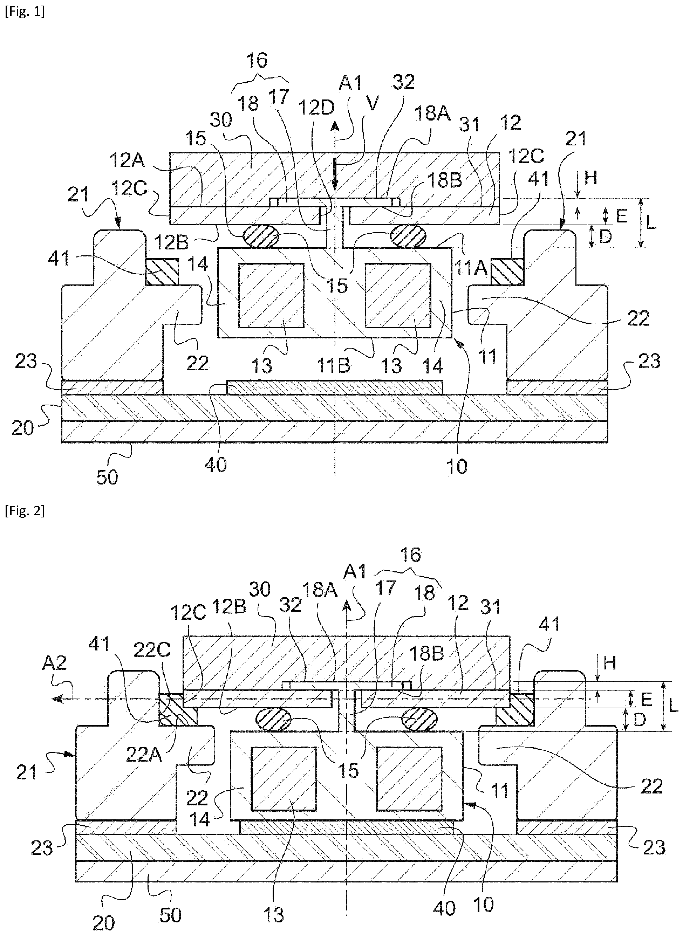

Un actionneur haptique 10, ci-après appelé actionneur, est représenté en figure 1.

L'actionneur 10 comprend deux parties principales mobiles l'une par rapport à l'autre. L'actionneur 10 comprend ainsi un corps 11 adapté à générer un champ magnétique et une pièce 12 qui est mobile par rapport au corps et destiné à être attiré vers ce dernier sous l'effet du champ magnétique. Pour cela, le corps 11 comprend classiquement un solénoïde 13, ou une bobine, de fil conducteur générant le champ magnétique lorsque le fil conducteur est parcouru par un courant électrique. Le corps 11 comprend aussi une enveloppe 14, ici métallique ou ferromagnétique, entourant le solénoïde 13 et adaptée à la circulation du champ magnétique. L'enveloppe 14 favorise notamment la circulation du champ magnétique en direction de la pièce 12. La pièce 12 est quant à elle réalisée au moins en partie dans un matériau ferromagnétique afin d'être sensible au champ magnétique produit par le corps 11. Lorsque le courant alimente le solénoïde, le champ magnétique attire la pièce 12 vers le corps 11. Lorsque le courant est coupé, le champ magnétique l'est également et le corps 11 n'exerce plus d'attraction sur la pièce 12.

Dans la solution « pseudo-rattachée » représentée sur les figures 1 et 2, une fois l'actionneur 10 monté (figure 2), le corps 11 est fixé à une surface tactile 20 et la pièce 12 est fixée à un support 21, la surface tactile 20 fixée au support 21. Le support 21 est par exemple solidaire d'un tableau de bord de véhicule automobile équipé de la surface tactile 20. Dans tous les cas, l'effet de retour haptique fourni par l'actionneur 10 correspond à un déplacement de la surface tactile 20 par rapport au support 21. Ainsi, ici, lorsque le contact d'un doigt sur la surface tactile 20 est détecté, le champ magnétique est activé, ce qui induit un déplacement du corps 11 par rapport au support 21 et donc, puisque le corps 11 est solidaire de la surface tactile 20, un déplacement ou une déformation, de la surface tactile 20 par rapport au support 21. Une fois le champ magnétique coupé, la surface tactile 20 reprend sa position de repos de par son élasticité. Le retour la surface tactile 20 vers sa position est ici aidé par l'utilisation d'un moyen de rappel élastique, par exemple ici un anneau torique 15, positionné entre le corps 11 et la pièce 12, tel que représenté sur la figure 2.

Comme le montre la figure 1, le corps 11 et la pièce 12 sont tous deux centrés autour de l'axe du solénoïde, par la suite appelé axe longitudinal A1 de l'actionneur 10. Une fois monté, l'axe longitudinal A1 est sensiblement perpendiculaire à la surface tactile 20. Ainsi, par ce centrage, le déplacement relatif de la pièce 12 par rapport au corps 11 sous l'effet du champ magnétique est ici une translation le long de l'axe longitudinal A1.

Le corps 11 présente ici une forme globalement cylindrique autour de l'axe longitudinal A1, par exemple une forme cylindrique de révolution. Le corps 11 présente une longueur, selon l'axe longitudinal A1, qui est par exemple comprise entre 5 mm et 8 mm. La pièce 12 présente une forme de plaque ou de disque s'étendant dans un plan perpendiculaire à l'axe longitudinal A1. La pièce 12 présente une épaisseur E, selon l'axe longitudinal A1, qui est par exemple comprise entre 1 mm et 2 mm.

Comme le montre la figure 1, l'actionneur 10 comprend aussi une extension 16 fixée au corps 11 et s'étendant depuis le corps 11 en direction de la pièce 12. L'extension 16 s'étendent depuis une face arrière 11A du corps 11 situé à l'opposé de la surface tactile 20. Dans la suite, le qualificatif « avant » est relatif à une orientation en direction, i.e. en regard de la surface tactile 20 et, par opposition, le qualificatif « arrière » est relatif à une orientation à l'opposé de la surface tactile 20.

L'extension 16 s'étend en partie le long de l'axe longitudinal A1 à travers un évidement 17 prévu dans la pièce 12. L'évidement est donc situé au centre la pièce 12 et délimité par un bord central 12D de la pièce 12. L'extension 16 comprend ici une tige 17, ou un tube, le long de l'axe longitudinal A1, ce qui peut permettre de guider le déplacement relatif de la pièce 12 par rapport au corps 11.

Au niveau d'une face arrière 12A de la pièce 12, c'est-à-dire à l'opposé du corps 11, l'extension 16 se termine ici par une extrémité 18 élargie. L'exterminé 18 de l'extension 16 s'étendant ici sensiblement parallèlement à la pièce 12 et forme ainsi une buté à l'arrière de cette dernière. En d'autres termes, l'extrémité 18 présente une forme empêchant un passage de l'extrémité 18 par l'évidement 17. L'extrémité 18 présente par exemple une forme de disque ou de plaque. Dans un plan comprenant l'axe longitudinal, par exemple le plan de la figure 1, l'extension 16 présente ainsi une forme en T. Ainsi, la pièce 12 est solidaire du corps 11 puisqu'elle est bloquée d'une part par le corps 11 et d'autre par l'extrémité 18 de l'extension 16.

Comme le montre la figure 1, la pièce 12 est située à distance du corps 11. Comme expliqué en introduction, il convient que, une fois l'actionneur 10 monté, la distance entre le corps 11 et la pièce 12, appelé entrefer magnétique, soit égale à une distance prédéterminée D pour obtenir la force d'attraction désirée et donc l'effet de retour haptique désiré. Régler l'entrefer pour qu'il soit égale à la distance prédéterminée D permet aussi d'obtenir une répétabilité entre le montage de l'actionneur 10 et le montage d'un autre actionneur afin que les deux présentent les mêmes caractéristiques électromécaniques. L'entrefer caractérise la distance entre la pièce 12 et le corps 11 lorsque l'actionneur 10 est au repos, c'est-à-dire lorsque le corps 11 ne génère pas de champ magnétique.

On décrit maintenant le procédé de montage de l'actionneur 10. Préalablement à la mise en œuvre du procédé, la surface tactile 20 est montée et fixée sur le support 21, ici au moyen d'un joint 23. Le joint 23 présente une élasticité adaptée au déplacement de la surface tactile 20 par rapport au support 21. Le support 21 délimite un espace libre dans lequel est monté l'actionneur 10. A titre d'exemple, lors du montage, la surface tactile 20 est orientée vers le bas tandis que le support 21 est orienté vers le haut par rapport à la verticale. L'axe longitudinal A1 correspond alors à la direction bas-haut telle que représentée sur les figures 1 et 2. Au cours de la mise en œuvre du procédé la surface tactile est posée sur un socle plan 50, comme cela apparait sur les figures 1 et 2.

Au cours d'une étape préparatoire du procédé, une bande adhésive double face 40 est disposée sur la surface tactile 20. Cette bande adhésive double face 40 permet ultérieurement la fixation du corps 11 à la surface tactile 20.

Comme illustré en figure 1, le procédé commence plus spécifiquement par une première étape comprenant la préhension de la pièce 12 par l'outil 30 et le maintien de la pièce 12 par l'outil 30.

Pour cela, l'outil 30 comprend un électroaimant adapté à attirer vers lui la pièce 12 ferromagnétique. Cela permet de tirer avantageusement partie du fait que la pièce 12 soit ferromagnétique. En variante, l'outil peut comprendre des ventouses à plaquer contre la pièce et un système fluidique permettant de contrôler la pression au niveau des ventouses pour maintenir ou relâcher la pièce.

Comme le montre la figure 1, l'outil 30 présente, dans un plan perpendiculaire à l'axe longitudinal A1, un profil en forme de U comprenant deux branches reliées par une base. La pièce 12 est maintenue contre les branches et plus spécifiquement contre des terminaisons des branches qui sont orientées vers la surface tactile 20. L'extrémité 18 de l'extension 16 est alors positionnée en regard de la base. L'extrémité 18 est ainsi entourée par la pièce 12 et l'outil 30, ce qui permet à l'outil 30 de maintenir l'actionneur 10 lui-même. De façon générale, la pièce 12 étant bloquée entre le corps 11 et l'extrémité 18 de l'extension 16, maintenir la pièce 12 permet de maintenir l'actionneur 10.

Ici, l'outil 30 comprend ainsi une surface extérieure 31 conçue pour être au contact de la pièce 12 et une surface intérieure 32 conçue pour être au contact de l'extension 16. La surface intérieure 32 délimite donc ici en partie la base de l'outil 10. La distance entre la surface extérieure 31 et la surface intérieure 32 correspond ainsi à une hauteur H, selon l'axe longitudinal A1 lorsque l'outil 30 maintient l'actionneur 10, des branches. Dans l'exemple illustré en figure 1, ces deux surfaces sont perpendiculaires à l'axe longitudinal A1 lorsque l'outil 30 maintient l'actionneur 10. De façon générale, la surface extérieure 31 est adaptée à la forme de la pièce 12 et la surface intérieure 32 est adapté à la forme de l'extension 16 et plus particulièrement de l'extrémité 18.

Comme le montrent les figures 1 et 2, l'outil 30 présente donc ici un profil étagé dans lequel la surface intérieure 32 est parallèle à la surface extérieure 31, ce qui est particulièrement adapté à la forme en T de l'extension 18.

Le procédé se poursuit ensuite par une deuxième étape de déplacement de la pièce 12, et donc ici de l'actionneur 10, par l'outil 30. L'outil 30 est par exemple monté sur un bras robotisé permettant d'effectuer un mouvement déterminé de l'outil 30.

La deuxième étape comprend alors le positionnement du corps 11 par rapport à la surface tactile 20 et d'autre part la mise en butée de l'outil 30 contre l'extension 16.

Pour cela, comme schématisée en figure 2 par une flèche verticale V, le déplacement de l'outil 30 comprend ici un mouvement de translation orthogonal à la surface tactile 20 et en direction de la surface tactile 20, i.e. un mouvement vertical vers le bas.

Ce mouvement de translation comprend une première phase au cours de laquelle une face avant 11B du corps 11 est amenée au contact de la bande adhésive double face 40 positionnée sur la surface tactile 20. Ce mouvement de translation comprend ensuite une deuxième phase au cours de laquelle l'outil 30 est amené en butée contre l'extrémité 18 de l'extension 16.

Ici, dans un cas particulier représenté sur les figures 1 et 2, l'extrémité 18 de l'extension 16 est avantageusement prise en sandwich entre l'outil 30 et la pièce 12 de sorte à être immobilisée entre ces derniers. Dans ce cas particulier, la hauteur H entre la surface extérieure 31 et la surface intérieure 32 correspond à une épaisseur de l'extrémité 18 selon l'axe longitudinal A1. Les deux phases sont donc concomitantes puisque l'extension 16 est d'ores et déjà en butée contre la surface intérieure 32 lors de la préhension de la pièce 12. Cette forme particulière de l'outil 30 permet un positionnement plus précis du corps 11 de l'actionneur 10 sur la surface tactile 20.

Toutefois, dans un cas plus général, la hauteur H entre la surface extérieure 31 et la surface intérieure 32 est supérieure à l'épaisseur E de l'extrémité 18. Ainsi, au cours de la première phase, le corps 11 est suspendu à la pièce 12 par l'extension 16 et plus spécifiquement par une face avant 18B de l'extrémité 18. Au cours de la deuxième phase, l'outil 30 est alors amené en butée contre l'extrémité 18 de l'extension 16 en effectuant une course non nulle.

Dans tous les cas, à la fin de la deuxième étape, l'outil 30 est en butée contre l'extrémité 18 de l'extension 16 et plus spécifiquement contre une face arrière 18A de l'extrémité 18.

De façon remarquable, l'outil 30 présente une forme spécifiquement conçue de telle sorte que, lorsque l'outil 30 maintient la pièce 12 et que l'outil 30 est en butée sur l'extension 16, la pièce 12 est située à la distance prédéterminée D du corps 11.

Pour cela, la hauteur H entre la surface extérieure 31 et la surface intérieure 32 est déterminée lors de la conception de la pièce 12. Ici, dans la configuration illustrée en figure 2, elle est déterminée de sorte à être égale, selon l'axe longitudinal A1, à la longueur L de l'extension 16, définie entre la face arrière 11A du corps 11 à la face arrière 18B de l'extrémité 18, moins la distance prédétermine D, moins l'épaisseur E de la pièce 12. Ainsi, la distance de la surface intérieure 31 et la surface extérieure 32 est conçue de sorte que la pièce 12 est située à la distance prédéterminée D du corps 11 lorsque l'outil 30 est en butée sur l'extension 16.

Par conséquent, en fixant le corps 11 à la surface tactile 20 et la pièce 12 au support 21 dans cette position, i.e. lorsque l'outil 30 est en butée contre l'extension 16, l'entrefer est égal à la distance prédéterminée D. Ainsi, l'entrefer est automatiquement ajusté.

Une troisième étape du procédé comprend la fixation du corps 11 à la surface tactile 20. Ici, cette troisième étape est réalisée en positionnant le corps 11 au contact de la bande adhésive double face 40 préalablement disposée sur la surface tactile 20. La troisième étape est donc réalisée en parallèle de la deuxième étape. En d'autres termes, la fixation du corps 11 à la surface tactile 20 est concomitante au déplacement de l'outil 10. Les deuxième et quatrième étapes sont alors simultanées.

Une quatrième étape du procédé comprend la fixation de la pièce 12 au support 21. Ici, la quatrième étape comprend l'utilisation d'une colle 41. La colle 41 est fluide ou visqueuse lorsqu'elle est déposée puis durcit en polymérisant de manière à lier le support 21 et la pièce 12. Après montage, l'actionneur 10 comprend ainsi ici la 41 colle durcie agencée pour fixer la pièce 12 au support 21.

Avantageusement, l'utilisation de la colle 41 permet un rattrapage de jeux, par exemple dus à des tolérances de fabrication du support 21. En effet, la colle 41 ne nécessite pas de prédéfinir la position de la fixation de la pièce 12 au support 21 (comme cela serait le cas d'un clip fixé au support prévu pour recevoir un bord de la pièce).

En variante, tout moyen de fixation accordant une tolérance sur le positionnement de la pièce par rapport au support peut être utilisé. Ainsi, par exemple, il peut être prévu de souder la pièce au support.

La colle 41 est par exemple une résine époxyde, une colle thermodurcissable, ou encore une colle dite « UV » donc la polymérisation est activée par un rayonnement ultraviolet.

Comme le montre la figure 2, la pièce 12 dépasse du corps 11 selon une direction orthogonale à l'axe longitudinal A1, ce qui facilite la fixation de la pièce 12 à la partie du support 21 qui l'entoure. Par exemple, sur la figure 2, la pièce 12 dépasse du corps 11 selon un axe radial A2 perpendiculaire à l'axe longitudinal A1 et passant par la pièce 12.

De plus, la pièce 12 est avantageusement collée au support 21 par une face avant 12B et par un bord périphérique 12C reliant la face avant 12B et la face arrière 12A de la pièce 12. Le bord périphérique 12C s'étend ici selon l'axe longitudinal A1 et est donc inclinée de 90 degrés par rapport à la face avant 12B de la pièce 12.

Coller ainsi la pièce 12 au support 21 confère une grande résistance à la fixation de la pièce 12 au support 21, notamment car cela permet à la colle 41 de travailler en traction à la fois selon l'axe longitudinal A1 et orthogonalement à l'axe longitudinal A1 de manière à résister efficacement à des contraintes selon ces deux directions.

Avantageusement, comme le montre la figure 1, la colle 41 est déposée sur le support 21 avant le déplacement de l'actionneur 10 par l'outil 30, par exemple au cours de l'étape préalable. L'actionneur 10 est alors positionné avant que la colle 41 ne durcisse, c'est-à-dire pendant le temps de travail de la colle 41. La fixation de la pièce 12 sur le support 21 comprend donc le durcissement de la colle 41. Ce durcissement peut s'effectuer par séchage de la colle 41. Ce durcissement peut aussi est déclenché ou accéléré en exposant la colle 41 à des rayons ultraviolets dans le cadre d'une colle UV ou par échauffement dans le cadre d'une colle thermodurcissable.

Comme le montre la figure 1, le support 21 présente un épaulement 22 en direction de l'actionneur 10 et plus particulièrement du corps 11. Cet épaulement 22 permet d'une part de retenir la colle 41 avant le positionnement de la pièce 12, comme illustré en figure 1. D'autre part, cet épaulement 22 permet d'offrir deux surfaces de collage 22A, 22C, l'une en regard du bord périphérique 12C de la pièce 12 et l'autre en regard de la face avant 12B de la pièce 12, ce qui renforce la fixation par la colle 41.

Une fois la colle 41 déposée sur l'épaulement 22, la pièce 12 peut donc être enfoncée dans la colle 41 en direction de l'épaulement jusqu'à ce que la pièce 12 soit située à la distance prédéterminée D du corps 11. Comme schématisé sur les figures 1 et 2, lors de l'enfoncement de la pièce 12 dans la colle 41, la colle 41 se répartie entre la pièce 12 et le support.

Ainsi, il apparait qu'un décalage selon l'axe longitudinal A1 de l'épaulement 22 d'un actionneur 10 à un autre (dû à des tolérances de fabrication) peut être compensée par la répartition de la colle 41. De préférence, il est donc déposé sur l'épaulement une épaisseur de colle 41 supérieure aux tolérances de fabrication du support 21.

En variante, la colle peut être déposée, ou plus spécifiquement, injectée entre support et pièce après le positionnement de la pièce par l'outil. La colle vient alors combler un espace libre entre le support la pièce, par exemple ici entre l'épaulement et la pièce.

Jusqu'à présent, le procédé a été décrit avec la bande adhésive double face 40 disposée entre la surface tactile 20 et le corps 11 et la colle 41 entre la pièce 12 et le support 21. Toutefois, il peut être prévu dans le procédé selon l'invention d'utiliser la colle entre le corps et la surface tactile et la bande adhésive entre la pièce et le support. Pour cela, la bande adhésive peut être disposée sur l'épaulement et la colle sur la surface tactile. Cette configuration permet aussi un rattrapage des jeux, mais cette fois en enfonçant le corps dans la colle au niveau de la surface. En complément, il est aussi possible d'utiliser de la colle à la fois pour la fixation du corps sur la surface tactile et de la pièce sur le support.

La présente invention n'est nullement limitée aux modes de réalisations décrits et représentés, mais l'homme du métier saura y apporter toute variante conforme à l'invention. En variantes, les différentes parties de l'actionneur pourraient être installées les unes après les autres. A titre d'exemple, le corps pourrait dans un premier temps être fixé à la surface tactile sans l'outil. Avec une extension formant un simple tube, c'est-à-dire sans extrémité élargie, la pièce pourrait ensuite être placée par l'outil autour de l'extension à la distance prédéterminé. Dans un dernier temps, la pièce serait fixée au support.

## Revendications

1. Procédé de montage d'un actionneur haptique (10) sur un support (21) et sur une surface tactile (20) fixée au support (21), l'actionneur haptique (10) comprenant :
- un corps (11) adapté à générer un champ magnétique lorsque le corps (11) est alimenté par un courant électrique ;
- une pièce (12) adaptée à être attirée vers le corps (11) sous l'effet du champ magnétique ;
- une extension (16) fixée au corps (11) et s'étendant en direction de la pièce (12);
le procédé de montage comprenant les étapes suivantes :
- maintien de la pièce (12) par un outil (30) et déplacement de l'outil (30) de manière à mettre l'outil (30) en butée sur l'extension (16), l'outil (30) présentant une forme conçue de telle sorte que, lorsque l'outil (30) maintient la pièce (12) et que l'outil (30) est en butée sur l'extension (16), la pièce (12) est située à une distance prédéterminée (D) du corps (11) ;
- fixation du corps (11) à la surface tactile (20) ;
- fixation de la pièce (12) par rapport au support (21) lorsque l'outil (30) est en butée sur l'extension (16).

2. Procédé selon la revendication 1, dans lequel l'outil (30) comprend une surface extérieure (31) conçue pour être au contact de la pièce (12) et une surface intérieure (32) conçue pour être au contact de l'extension (16), la surface extérieure (31) s'étendant à une distance de la surface intérieure (32) déterminée de sorte que la pièce (12) est située à la distance prédéterminée (D) du corps (11) lorsque l'outil (30) est en butée sur l'extension (16).

3. Procédé selon la revendication 2, dans lequel l'outil (30) présente un profil étagé dans lequel la surface intérieure (32) est parallèle à la surface extérieure (31).).

4. Procédé selon l'une des revendications 1 à 3, dans lequel l'outil (30) est aussi conçu pour maintenir l'extension (16) et dans lequel le déplacement de l'outil (30) comprend le positionnement du corps (11) par rapport à la surface tactile (20), la fixation du corps (11) à la surface tactile (20) étant postérieure au déplacement de l'outil (30) ou concomitant au déplacement de l'outil (30).

5. Procédé selon l'une des revendications 1 à 4, dans lequel la pièce (12) comprend un évidement traversé par l'extension (16), l'extension (16) comprenant une extrémité (18) d'un côté de la pièce (12) opposé au corps (11), l'extrémité (18) présentant une forme empêchant un passage de l'extrémité (18) par l'évidement et permettant le maintien de l'extrémité (18) entre la pièce (12) et l'outil (30) lorsque l'outil (30) maintient la pièce (12).

6. Procédé selon l'une des revendications 1 à 5, dans lequel l'outil (30) comprend un électroaimant.

7. Procédé selon l'une des revendications 1 à 6, dans lequel au moins l'une parmi la fixation du corps (11) à la surface tactile (20) et la fixation de la pièce (12) par rapport au support (21) comprend l'utilisation d'une colle (41).

8. Procédé selon la revendication 7, dans lequel la colle (41) est déposée avant le déplacement de l'outil (30) de manière à mettre en butée l'outil (30) sur l'extension (16).

9. Procédé selon la revendication 7 ou 8, dans lequel la pièce (12) comprend deux surfaces inclinées (12B, 12C) l'une par rapport à l'autre, la colle assurant, après avoir durci, la fixation de chacune des deux surfaces (12B, 12C) de la pièce (12) par rapport au support (21).

10. Actionneur haptique (10) obtenu par le procédé de montage selon l'une quelconque des revendications précédentes, comprenant :
- un corps (11) adapté à générer un champ magnétique lorsque le corps (11) est alimenté par un courant électrique, le corps (11) étant fixé à une surface tactile (20);
- une pièce (12) adaptée à être attirée vers le corps (11) sous l'effet du champ magnétique, la pièce (12) étant fixée à une support (21) sur lequel est fixé la surface tactile (20) ;
une colle durcie (41) agencée pour fixer le corps (11) à la surface tactile (20) ou la pièce (12) au support (21).

11. Actionneur haptique (10) selon la revendication 10, dans lequel la pièce (12) dépasse du corps (11) selon une direction (A2) orthogonale à une direction (A1) d'attraction de la pièce (12) vers le corps (11).

## Patentansprüche

1. Verfahren zur Montage eines haptischen Aktuators (10) auf einem Träger (21) und auf einer an dem Träger (21) befestigten Touch-Oberfläche (20), wobei der haptische Aktuator (10) umfasst:
- einen Körper (11), der dazu eingerichtet ist, ein Magnetfeld zu erzeugen, wenn der Körper (11) mit einem elektrischen Strom versorgt wird;
- ein Teil (12), das dazu eingerichtet ist, unter der Wirkung des Magnetfeldes zu dem Körper (11) hin angezogen zu werden;
- eine Verlängerung (16), die an dem Körper (11) befestigt ist und sich in Richtung des Teils (12) erstreckt; wobei das Verfahren zu Montage die folgenden Schritte umfasst:
- Halten des Teils (12) durch ein Werkzeug (30) und Verlagerung des Werkzeugs (30) derart, dass das Werkzeug (30) zur Anlage an der Verlängerung (16) gebracht wird, wobei das Werkzeug (30) eine Form aufweist, die so gestaltet ist, dass, wenn das Werkzeug (30) das Teil (12) hält und wenn das Werkzeug (30) an der Verlängerung (16) anliegt, das Teil (12) sich in einem vorbestimmten Abstand (D) vom Körper (11) befindet;
- Befestigung des Körpers (11) an der Touch-Oberfläche (20);
- Befestigung des Teils (12) in Bezug auf den Träger (21), wenn das Werkzeug (30) an der Verlängerung (16) anliegt.

2. Verfahren nach Anspruch 1, wobei das Werkzeug (30) eine äußere Fläche (31), die dazu ausgebildet ist, sich mit dem Teil (12) in Kontakt zu befinden, und eine innere Fläche (32), die dazu ausgebildet ist, sich mit der Verlängerung (16) in Kontakt zu befinden, umfasst, wobei sich die äußere Fläche (31) in einem Abstand von der inneren Fläche (32) erstreckt, der so bemessen ist, dass sich das Teil (12) in dem vorbestimmten Abstand (D) vom Körper (11) befindet, wenn das Werkzeug (30) an der Verlängerung (16) anliegt.

3. Verfahren nach Anspruch 2, wobei das Werkzeug (30) ein gestuftes Profil aufweist, bei dem die innere Fläche (32) parallel zur äußeren Fläche (31) ist.

4. Verfahren nach einem der Ansprüche 1 bis 3, wobei das Werkzeug (30) außerdem dazu ausgebildet ist, die Verlängerung (16) zu halten, und wobei die Verlagerung des Werkzeugs (30) die Positionierung des Körpers (11) in Bezug auf die Touch-Oberfläche (20) umfasst, wobei die Befestigung des Körpers (11) an der Touch-Oberfläche (20) nach der Verlagerung des Werkzeugs (30) oder gleichzeitig mit der Verlagerung des Werkzeugs (30) erfolgt.

5. Verfahren nach einem der Ansprüche 1 bis 4, wobei das Teil (12) eine von der Verlängerung (16) durchquerte Aussparung umfasst, die Verlängerung (16) ein Ende (18) auf einer dem Körper (11) gegenüberliegenden Seite des Teils (12) umfasst und das Ende (18) eine Form aufweist, die eine Bewegung des Endes (18) durch die Aussparung hindurch verhindert und das Halten des Endes (18) zwischen dem Teil (12) und dem Werkzeug (30) ermöglicht, wenn das Werkzeug (30) das Teil (12) hält.

6. Verfahren nach einem der Ansprüche 1 bis 5, wobei das Werkzeug (30) einen Elektromagneten umfasst.

7. Verfahren nach einem der Ansprüche 1 bis 6, wobei die Befestigung des Körpers (11) an der Touch-Oberfläche (20) und/oder die Befestigung des Teils (12) in Bezug auf den Träger (21) die Verwendung eines Klebstoffs (41) umfassen.

8. Verfahren nach Anspruch 7, wobei der Klebstoff (41) vor der Verlagerung des Werkzeugs (30), um das Werkzeug (30) zur Anlage an der Verlängerung (16) zu bringen, aufgebracht wird.

9. Verfahren nach Anspruch 7 oder 8, wobei das Teil (12) zwei relativ zueinander geneigte Flächen (12B, 12C) umfasst, wobei der Klebstoff, nachdem er ausgehärtet ist, die Befestigung jeder der zwei Flächen (12B, 12C) des Teils (12) in Bezug auf den Träger (21) sicherstellt.

10. Haptischer Aktuator (10), welcher durch das Verfahren zur Montage nach einem der vorhergehenden Ansprüche erhalten wird, umfassend:
- einen Körper (11), der dazu eingerichtet ist, ein Magnetfeld zu erzeugen, wenn der Körper (11) mit einem elektrischen Strom versorgt wird, wobei der Körper (11) an einer Touch-Oberfläche (20) befestigt ist;
- ein Teil (12), das dazu eingerichtet ist, unter der Wirkung des Magnetfeldes zu dem Körper (11) hin angezogen zu werden, wobei das Teil (12) an einem Träger (21) befestigt ist, auf dem die Touch-Oberfläche (20) befestigt ist;
einen ausgehärteten Klebstoff (41), der dazu eingerichtet ist, den Körper (11) an der Touch-Oberfläche (20) oder das Teil (12) an dem Träger (21) zu befestigen.

11. Haptischer Aktuator (10) nach Anspruch 10, wobei das Teil (12) über den Körper (11) in einer Richtung (A2) hinausragt, die zu einer Richtung (A1) der Anziehung des Teils (12) zum Körper (11) hin orthogonal ist.

## Claims

1. Method for mounting a haptic actuator (10) on a support (21) and on a touch-sensitive surface (20) fastened to the support (21), the haptic actuator (10) comprising:
- a body (11) designed to generate a magnetic field when the body (11) is supplied with an electric current;
- a part (12) designed to be attracted towards the body (11) under the effect of the magnetic field;
- an extension (16) fastened to the body (11) and extending towards the part (12); the mounting method comprising the following steps:
- holding the part (12) using a tool (30) and moving the tool (30) so as to bring the tool (30) into abutment against the extension (16), the tool (30) having a shape configured such that, when the tool (30) is holding the part (12) and the tool (30) is in abutment against the extension (16), the part (12) is located at a predetermined distance (D) from the body (11);
- fastening the body (11) to the touch-sensitive surface (20);
- fastening the part (12) relative to the support (21) when the tool (30) is in abutment against the extension (16).

2. Method according to Claim 1, wherein the tool (30) includes an outer surface (31) configured to be in contact with the part (12) and an inner surface (32) configured to be in contact with the extension (16), the outer surface (31) extending at a distance from the inner surface (32) that is determined such that the part (12) is located at the predetermined distance (D) from the body (11) when the tool (30) is in abutment against the extension (16).

3. Method according to Claim 2, wherein the tool (30) has a stepped profile in which the inner surface (32) is parallel to the outer surface (31).

4. Method according to one of Claims 1 to 3, wherein the tool (30) is also configured to hold the extension (16) and wherein moving the tool (30) comprises positioning the body (11) relative to the touch-sensitive surface (20), the body (11) being fastened to the touch-sensitive surface (20) after the tool (30) has been moved or while the tool (30) is being moved.

5. Method according to one of Claims 1 to 4, wherein the part (12) comprises a recess through which the extension (16) passes, the extension (16) comprising an end (18) on a side of the part (12) that faces away from the body (11), the end (18) having a shape that prevents the end (18) from passing through the recess and that makes it possible for the end (18) to be held between the part (12) and the tool (30) when the tool (30) is holding the part (12).

6. Method according to one of Claims 1 to 5, wherein the tool (30) comprises an electromagnet.

7. Method according to one of Claims 1 to 6, wherein at least one out of fastening the body (11) to the touch-sensitive surface (20) and fastening the part (12) relative to the support (21) comprises using an adhesive (41).

8. Method according to Claim 7, wherein the adhesive (41) is deposited before the tool (30) is moved such that the tool (30) is brought into abutment against the extension (16).

9. Method according to Claim 7 or 8, wherein the part (12) comprises two mutually inclined surfaces (12B, 12C), the adhesive ensuring, after it has cured, that each of the two surfaces (12B, 12C) of the part (12) is fastened relative to the support (21).

10. Haptic actuator (10) obtained by the mounting method according to any one of the preceding claims, comprising:
- a body (11) designed to generate a magnetic field when the body (11) is supplied with an electric current, the body (11) being fastened to a touch-sensitive surface (20);
- a part (12) designed to be attracted towards the body (11) under the effect of the magnetic field, the part (12) being fastened to a support (21) to which the touch-sensitive surface (20) is fastened;
a cured adhesive (41) arranged so as to fasten the body (11) to the touch-sensitive surface (20) or the part (12) to the support (21).

11. Haptic actuator (10) according to Claim 10, wherein the part (12) projects beyond the body (11) in a direction (A2) orthogonal to a direction (A1) in which the part (12) is attracted towards the body (11).
